# EUROPEAN PATENT APPLICATION

(11) **EP 1 321 267 A1**
(43) Date of publication of application: **25.06.2003**
(21) Application number: 02079930.0
(22) Date of filing: 26.11.2002
(51) Int. Cl.: B29C 33/38, B29C 39/02

(54) **Method of making a mould for the production of shoe forms**

(30) Priority: 20.12.2001 IT MI20012723
(71) Applicant: Negri, Angelo, Vigevano (Pavia) (IT)
(72) Inventor: Negri, Angelo, Vigevano (Pavia) (IT)
(74) Representative: Raimondi, Alfredo, Dott. Ing. Prof.

(57) **Abstract**

Method of making a mould (10,20) for the production of shoe forms, comprising the steps of preparation of a first half-container (10) provided with an internal seat (11); preparation of a second half-container (20) provided with an internal seat (21) which is a mirror-image of the seat (11) of the first half-container and with holes (23) for communication with the exterior; insertion, inside the said seat (11) of the first half-container, of a model (100) corresponding to the form to be made; positioning and fixing of the model (100) and casting inside the seat (11) of the first half-container (10), of a suitable hardening material (30); hardening of the previously cast material (30); positioning of the second half-container (20) on top of the first half-container (10); casting, inside the closed container, of a suitable hardening material; hardening of the previously cast material; opening of the container by means of separation of the two half-containers; extraction of the model (100) from the first half-container.

## Description

The present invention relates to a method of making moulds for the production of shoe forms and an associated mould obtained by means of this method.

It is known in the shoe manufacturing sector that shoes are produced using a shaped element - a so-called form - which reproduces the same shape of the finished shoe in the various sizes envisaged.

An original model of this form is usually made by the shoe designer and subsequently reproduced in large quantities for use during production.

It is also known that the industrial manufacture of a large number of forms required for the production of shoes is performed using traditional methods which have numerous drawbacks arising from the fact that said forms are made from a rough form obtained by means of injection-moulding and having dimensions much greater than the nominal dimensions envisaged for the finished form.

During subsequent rough-shaping of the form, two protrusions or "humps" facing each other in the longitudinal direction are created, said humps being necessary for the subsequent form finishing steps, which are mostly performed manually and usually comprise: finish-machining, elimination of the humps, a cut for insertion of a hinging element between toe and heel of the form, the mounting of metal reinforcements in the zones where the insertion of nails for fixing the upper is envisaged, the insertion of a manoeuvring sleeve and final surface finishing.

Although widely used, these forms thus manufactured have, however, the drawback that they require a large number of successive operations in order to obtain the finished form, with consequent high production costs, and, even more significantly, with a consequent notable difference between the final dimensions of each form owing to the major imprecision which the manual processing operations inevitably give rise to in the finished product, said differences preventing, among other things, being able to standardise and automate advantageously the subsequent production of the shoe.

The technical problem which is posed, therefore, is that of providing a method of making an apparatus able to allow finished forms for the production of shoes to be produced in a rapid and low-cost manner and with a high degree of repeatability and precision.

Within the scope of this problem, a further requirement is that this apparatus may be made with materials which are not harmful and can be easily eliminated at the end of its working life.

These technical problems are solved according to the present invention by a method of making a mould for the production of shoe forms, comprising the following steps:
- preparation of a first half-container provided with an internal seat and means for moving, centring and fixing a model corresponding to the final form;
- preparation of a second half-container provided with an internal seat which is a mirror image of the seat of the first half-container and with holes for communication with the exterior;
- insertion, in the said seat of the first half-container, of a model corresponding to the form to be made;
- positioning and fixing of the model;
- casting, inside the seat of the first half-container, of a suitable hardening material;
- hardening of the previously cast material;
- positioning of the second half-container on top of the first half-container;
- relative locking of the two half-containers;
- casting, inside the closed container, of a suitable hardening material;
- hardening of the previously cast material;
- opening of the container by means of separation of the two half-containers;
- extraction of the model from the first half-container.

A further object of the present invention is to provide a mould for the production of shoe forms, comprising a first and a second half-mould, in which said half-moulds are obtained by means of a method as described above.

Further details may be obtained from the following description of a non-limiting example of embodiment of the invention provided with reference to the accompanying plates of drawings in which:
- Figure 1 shows a perspective view of a mould for shoe forms according to the present invention during the preparation step;
- Figure 2 shows a view similar to that of Fig. 1, with an original model inserted in position inside the mould;
- Figure 3 shows a cross-section along a longitudinal vertical plane of the bottom half-mould after casting;
- Figure 4 shows a cross-section along a longitudinal vertical plane of the closed mould after casting;
- Figure 5 shows a cross-section along a longitudinal vertical plane of the finished and open mould;
- Figure 6 shows a perspective view of a variation of an example of embodiment of the open mould according to the present invention;
- Figure 7 shows a cross-section along a longitudinal vertical plane of the bottom half-mould shown in Fig. 6; and
- Figure 8 shows a cross-section along a longitudinal vertical plane of the closed mould according to Fig. 6 after casting.

As shown, the mould according to the present invention for the production of shoe forms comprises a first half-container 10, which is the bottom one in the example, and a second, upper, half-container 20, inside each of which a respective seat 11,21 - one being the mirror-image of the other one - is formed and designed with dimensions suitable for containing the original model 100 of the shoe.

For the sake of convenience of the description, three axes of orientation, in the longitudinal direction X-X (length of the form), transverse direction Y-Y (height of the form) and vertical direction or thickness Z-Z (width of the form), are also defined.

The upper surface 10a of the half-container 10 is provided with reference pins 12 able to engage with corresponding seats 22 in the upper half-mould so as to allow correct relative positioning at the time of joining together of the two half-containers 10,20.

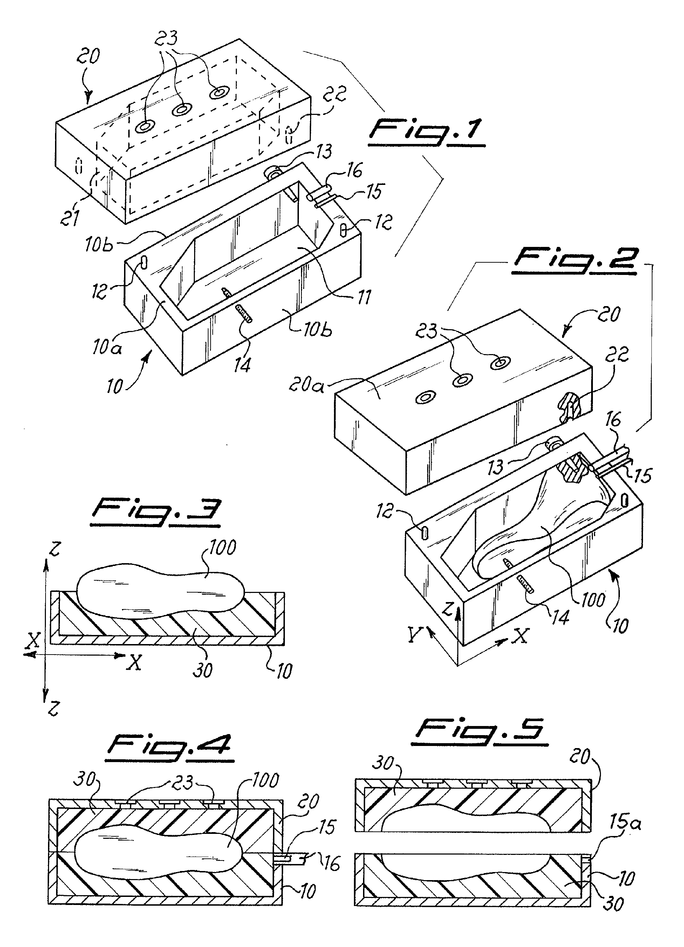

The opposite side surfaces 10b of the bottom half-container 10 have, formed in them, suitable through-holes able to allow insertion of a pin 13 and a threaded dowel 14; the pin 13 is able to engaged with a corresponding sleeve 101 which remains inside the finished model 100 (Fig. 2), for moving and positioning the form during the subsequent processing operations; the dowel 14, on the other hand, forms a stop, reference and fixing element for the model 100 (Fig. 2), once the latter has been correctly positioned.

Two pins 15 and 16 of varying diameter are also arranged on the upper surface 10a of the bottom half-mould, said pins being respectively able to determine the subsequent moulding of corresponding channels for supplying the mould filling substance and providing an air breather outlet 15a (Fig. 5) during moulding of the forms using a method not described in detail and forming the subject of a co-pending patent application in the name of the same Applicant.

The upper surface 20a of the half-container 20 has, formed in it, openings 23 able to allow casting of material 30 for moulding of the upper half-mould.

Once completed, the mould is therefore formed by two half-moulds 10,20 which are already separate from each other without the need for cutting operations.

The method according to the present invention for making a mould for the production of shoe forms envisages the following steps:
- preparation of a first half-container 10 provided with a seat 11 of suitable dimensions and with means 13 and 14 respectively for moving, centring and fixing a shoe model 100 (Fig. 1);
- insertion, in the said seat 11, of a shoe model 100 having a form corresponding to the model to be produced (Fig. 2);
- positioning and fixing of the model 100 by means of the pin 13 and the threaded dowel 14 so that the model is entirely contained in the seat 11 in the longitudinal direction X-X and transverse direction Y-Y, but only partially contained in the direction of the thickness Z-Z;
- housing of the pins 15 and 16 in the respective seats of the half-container 10;
- casting, inside the seat 11 of the half-container 10, of a suitable material 30 able to harden preferably at room temperature (Fig. 3);
- hardening of the previously cast material;
- positioning of the half-container 20 on top of the half-container 10 with relative centring by means of the pins 12 and the holes 22;
- relative locking of the two half-moulds by means of suitable fast fixing means such as screws, tie-rods, cylinders and the like;
- casting, inside the closed container, of a suitable material hardening at room temperature, supplied via the holes 23 of the upper half-container 20 (Fig. 4);
- hardening of the previously cast material 30;
- separation of the upper half-container 20 from the bottom half-container 10;
- extraction of the model 100 from the bottom half-container in a direction which is perpendicular (vertical Z-Z in the example shown) relative to the greater plane of the half-container.

Once the two half-containers have been separated and the model extracted, the two half-moulds for the subsequent manufacture of the forms for the production of shoes are defined.

According to preferred modes of implementation of the method it is envisaged:
- that the material 30 cast in the second (upper) half-container is the same material used for previous casting in the bottom half-container 10 and
- that the hardening material to be cast in the two half-containers consists of fluid silicone rubber, dual-component fluid silicone rubber, silicone rubber crosslinking by means of condensation with the addition of a suitable catalyst, silicone rubber which reacts by means of addition.

In all cases it is envisaged that hardening occurs at room temperature.

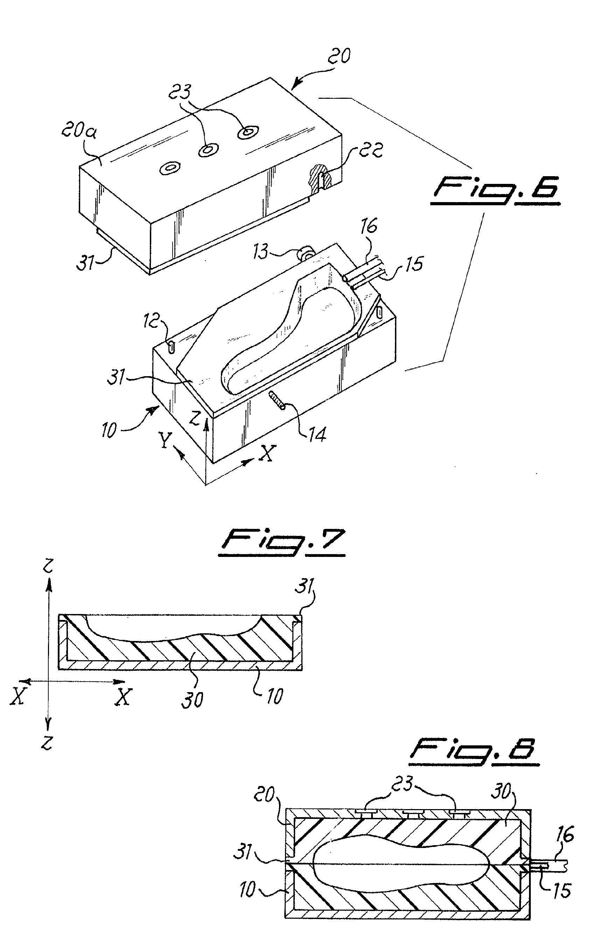

Figs. 6-8 shows a further embodiment of the mould according to the present invention which envisages casting of hardening material 30 such as to produce the formation of a layer 31 thereof beyond the edge of the respective half-mould 10,20; this layer will have a suitable perimetral form so as to avoid interference with the coupling pins/seats and the like.

With this solution it is possible to obtain the dual effect of compensating for any shrinkage of the material during hardening and ensuring closing of the mould with direct contact between the said layers 31 which basically form a seal preventing leakages of the cast material from the mould, said leakages resulting in the formation of burrs which must be removed during a subsequent mould finishing step.

Although not illustrated, it is within the competence of a person skilled in the art to produce the seal between the two closed half-moulds in the form of an auxiliary seal arranged between the two half-moulds.

Where necessary, another possibility which may be envisaged is that of applying a superficial layer of anti-adhesive substance on the free surface of the hardened material of the first half-container so as to facilitate the subsequent separation of the two half-moulds which must be performed by means of simple detachment without damaging the hardened material and without the need for cutting tools or the like.

It is therefore obvious how with the method according to the invention it is possible to obtain a mould for manufacturing forms for the production of shoes in a manner which is very much simplified compared to the traditional art, making it possible moreover to avoid having to cut the mould after hardening of the material as occurs in the said known art, it thus being possible to define the mould in a much more precise manner compared to that which can be achieved with the traditional art.

## Claims

1. Method of making a mould (10,20) for the production of shoe forms, comprising the following steps:
- preparation of a first half-container (10) provided with an internal seat (11) of suitable dimensions and means (13,14) for moving, centring and fixing a model (100) corresponding to the final form;
- preparation of a second half-container (20) provided with an internal seat (21) which is a mirror-image of the seat (11) of the first half-container and with holes (23) for communication with the exterior;
- insertion, inside the said seat (11) of the first half-container (10), of a model (100) corresponding to the form to be made;
- positioning and fixing of the model (100) by means of said associated means (13,14);
- casting, inside the seat (11) of the first half-container (10), of a suitable hardening material (30);
- hardening of the previously cast material (30);
- positioning of the second half-container (20) on top of the first half-container (10) with relative centring by means of corresponding means (12,22) so as to define a closed container (10,20);
- relative locking of the two half-containers (10,20);
- casting, inside the closed container, of a suitable hardening material supplied via the said supply holes (23) of the second half-container (20);
- hardening of the previously cast material;
- opening of the container by means of separation of the two half-containers;
- extraction of the model (100) from the first half-container.

2. Method according to Claim 1, **characterized in that** the model (100) corresponding to the form to be manufactured is inserted inside the said seat (11) of the first half-container (10) so that the model is entirely contained in the seat (11) in the two directions, i.e. longitudinal direction (X-X) and transverse direction (Y-Y), but only partially contained in the direction of the thickness (Z-Z).

3. Method according to Claim 1, **characterized in that** it envisages the further step of:
- housing, in respective seats of the first half-container (10), means (15, 16) able to define corresponding entry and exit channels upon completion of the mould;

4. Method according to Claim 1, **characterized in that** the same hardening material is used for the subsequent castings in both the half-containers.

5. Method according to Claim 1, **characterized in that** said hardening material consists of silicone rubber.

6. Method according to Claim 1, **characterized in that** the hardening reaction is activated by a suitable catalyst.

7. Method according to Claim 1, **characterized in that** the hardening reaction occurs at room temperature.

8. Method according to Claim 1, **characterized in that** said moving, centring and fixing means consist of a pin (13) and threaded dowel (14) passing through corresponding holes formed in the walls of the first half-container.

9. Method according to Claim 1, **characterized in that** said means for relative centring of the two half-containers (10,20) consist of pins (12) projecting from the free surface of the first half-container (10) and from corresponding seats (22) formed in the second half-container (20).

10. Method according to Claim 1, **characterized in that** means are envisaged for relative locking of the two half-containers after they have been joined together.

11. Method according to Claim 1, **characterized in that** said means able to determine the formation of supply/discharge channels consist of pins (15,16) arranged in between the two half-containers.

12. Method according to Claim 1, **characterized in that** the extraction of the model (100) from the first half-container (10) occurs in a direction perpendicular to the base of the half-container itself.

13. Method according to Claim 1, **characterized in that** it envisages insertion of a seal (31) between the two half-moulds before they are closed.

14. Method according to Claim 13, **characterized in that** said seal (31) is obtained by means of casting of the hardening material (30) beyond the edge of the associated half-mould (10, 20).

15. Mould for the production of shoe forms, comprising a first half-mould (10) and a second half-mould (20), **characterized in that** said half-moulds are obtained by means of a method according to Claim 1.

16. Mould according to Claim 15, **characterized in that** the hardening material used is the same for both the half-moulds.

17. Mould according to Claim 15, **characterized in that** said hardening material consists of silicone rubber.

18. Mould according to Claim 15, **characterized in that** said hardening material comprises a catalyst.

19. Mould according to Claim 15, **characterized in that** the casting material hardens at room temperature.

20. Mould according to Claim 15, **characterized in that** an anti-adhesive substance is applied onto the hardened surface of the first half-mould.

21. Mould according to Claim 15, **characterized in that** it comprises means for moving, centring and fixing the form, consisting of a pin (13) and a threaded dowel (14) passing through corresponding holes formed in the walls of the first half-mould.

22. Mould according to Claim 15, **characterized in that** it comprises means for relative centring of the two half-moulds (10,20), consisting of pins (12) projecting from the free surface of the first half-mould (10) and corresponding seats (22) formed in the second half-mould (20).

23. Mould according to Claim 15, **characterized in that** means are envisaged for relative locking of the two half-moulds after they have been joined together.

24. Mould according to Claim 15, **characterized in that** it comprises channels respectively for supplying the hardening material and for letting out air.

25. Mould according to Claim 15, **characterized in that** it comprises a seal (31) arranged between the two half-moulds (10,20) before they are closed.

26. Mould according to Claim 25, **characterized in that** said seal (31) consists of a layer of the hardening material (30) extending beyond the edge of the associated half-mould (10,20).

27. Use of a mould according to Claim 15 for the production of shoe forms.
